# EUROPEAN PATENT APPLICATION

(11) **EP 2 028 232 A1**
(43) Date of publication of application: **25.02.2009**
(21) Application number: 06766868.1
(22) Date of filing: 13.06.2006
(51) Int. Cl.: C08L 79/04, C08K 7/02, C08L 71/10, C08L 77/12

(54) **THERMOPLASTIC RESIN COMPOSITION**

(71) Applicant: Polyplastics Co., Ltd., Tokyo 108-8280 (JP); AZ Electronic Materials (Japan) K.K., Tokyo 113-0021 (JP)
(72) Inventor: TAGUCHI, Yoshiaki, Fuji-shi, Shizuoka 4168533 (JP); KATSUMATA, Toru, Fuji-shi, Shizuoka 4168533 (JP); SHIWAKU, Toshio, Fuji-shi, Shizuoka 4168533 (JP)
(74) Representative: Peel, James Peter
(86) International application number: PCT/JP2006/312204
(87) International publication number: WO 2007/144963

(57) **Abstract**

The invention provides a thermoplastic resin composition which has high rigidity and high flowability, gives less peeling of molding surface, and provides excellent appearance, and which can be suitably used for mechanical parts of automobile and mechanical parts of electrical and electronic products. Provided is the thermoplastic resin composition comprising: 100 parts by weight of (A) a sole polybenzimidazole resin or a mixed thermoplastic resin composed of 70 to 20% by weight of a polybenzimidazole resin and 30 to 80% by weight of a polyether ketone resin; and 5 to 100 parts by weight of (B) a liquid crystalline polyester amide resin containing one or more types of structuring monomer of 4-aminophenol, 1,4-phenylenediamine, 4-aminobenzoic acid, and a derivative thereof, and containing 3 to 35% by mole of an amide component in the total bonds.

## Description

### Technical Field

The present invention relates to a thermoplastic resin composition composed of: a sole polybenzimidazole resin or a mixture of a polybenzimidazole resin and a polyether ketone resin; and a liquid crystalline polyester amide resin, being used suitably for an injection-molded article, and the like. More specifically, the present invention relates to a thermoplastic resin composition which significantly increases the flowability of a sole polybenzimidazole resin or a mixture of a polybenzimidazole resin and a polybenzimidazole resin, functioning as the matrix, and further has high rigidity.

### Background Art

Liquid crystalline resins are suitably and widely used as the high functional engineering plastics owing to high flowability, mechanical strength, heat resistance, resistance to chemicals, and electrical properties.

Considerable industrial development in recent years has promoted wide-ranging, highly sophisticated and specialized applications of the liquid crystalline resins. In response to the movement, it has been hoped that the injection-molded article retaining these excellent physical properties would be obtained through the effective and economical molding manufacturing by injection molding and the like, taking advantage of high flowability of the liquid crystalline resins. For example, exterior plates of automobile and casings for electrical and electronic products also require sophisticated mechanical characteristics and great heat resistance for reduction in weight and thickness of the molded product, and further require resin materials that provide moldings having large size and high-class appearance. The liquid crystalline resins are, however, not preferred for the exterior plates of automobile and the casings for electrical and electronic products in view of the appearance of the moldings, and are difficult to be commonly used for large products because of the cost.

On the other hand, conventional polyether ketone resins and polybenzimidazole resins cannot satisfy these requirements, specifically high sophisticated mechanical characteristics and flowability, though they are fine in appearance.

In this regard, there are investigations about the resin compositions composed of polyether ketone resin or polybenzimidazole resin, and liquid crystalline resin. For example, in JP-A 1-252657 a resin composition composed of a polyether ketone resin and a liquid crystalline resin improves mechanical strength, and further in JP-A 2-140267 a resin composition composed of a polyether ketone resin, a liquid crystalline polyester amide resin, and a reinforcing fiber has been investigated. However, in the recent cases where these resin compositions are used for mechanical parts of automobile and mechanical parts of electrical and electronic products, which request high demand characteristics, the technologies disclosed in the above documents cannot solve the problem.

### Disclosure of the Invention

A purpose of the present invention is to provide a thermoplastic resin composition which solves the problems of the above prior art, has high rigidity and high flowability, exhibits small peeling of surface of molding, and gives excellent appearance, thereby being favorably used for mechanical parts of automobile and mechanical parts of electric and electronic products.

To achieve the above purpose, the inventors of the present invention conducted detail studies, and found that the blending of a specified liquid crystalline polyester amide resin into a sole polybenzimidazole resin or a mixture of a polybenzimidazole resin and a polyether ketone resin, as the matrix, provides a thermoplastic resin composition which considerably increases the rigidity of the sole polybenzimidazole resin or the mixture of the polybenzimidazole resin and the polyether ketone resin, as the matrix, gives excellent flowability and appearance while maintaining the heat resistance, and completed the present invention.

The present invention is the thermoplastic resin composition containing: 100 parts by weight of (A) a sole polybenzimidazole resin or a mixed thermoplastic resin composed of 70 to 20% by weight of a polybenzimidazole resin and 30 to 80% by weight of a polyether ketone resin; and 5 to 100 parts by weight of (B) a liquid crystalline polyester amide resin containing one or more types of structuring monomer of 4-aminophenol, 1,4-phenylenediamine, 4-aminobenzoic acid, and a derivative thereof, and containing 3 to 35% by mole of an amide component in the total bonds.

The thermoplastic resin composition according to the present invention composed of (A) a sole polybenzimidazole resin or a mixture of a polybenzimidazole resin and a polyether ketone resin, and (B) a specified liquid crystalline polyester amide resin has high rigidity and high flowability, induces no peeling of the surface of the molding obtained, and gives excellent appearance. Owing to the excellent flowability and thermal deformation temperature, the thermoplastic resin composition according to the present invention is suitable for the mechanical parts of automobile, the mechanical parts of electrical and electronic parts, and the like.

The present invention also provides uses for the above thermoplastic resin composition to manufacture the molding prepared by injection molding.

### Detailed Description of the Invention

The resin compositions of the present invention are described in the following in detail per individual ones. The polyether ketone resin which is a component of the (A) thermoplastic resin used in the present invention is not specifically limited, and contains a polymer substantially composed of the repeating unit expressed by the formula (I) and a copolymer containing that unit,

-O-Ph-O-Ph-O-Ph- (I)

wherein Ph indicates 1,4-phenylene. Commercially available polyether ketone resin includes 450G manufactured by Victrex Co or the like.

The polybenzimidazole resin which is another component of the (A) thermoplastic resin used in the present invention is the one expressed by the repeating unit formula of 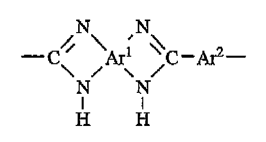 wherein 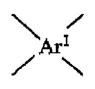 designates a tetravalent aromatic portion expressed by the formula: 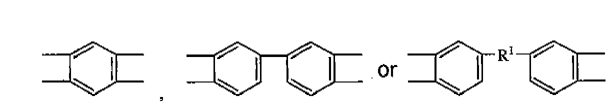 (wherein R¹ is expressed by -O-, -SO₂-, -CH=CH- or (-CH₂-)ₓ (wherein x is an integer from 1 to 4)); and -Ar²- is a bivalent aromatic portion expressed by the formula: 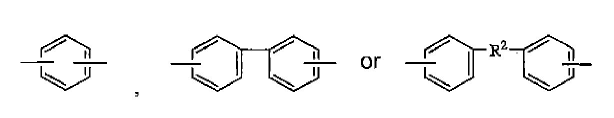 (wherein R² is expressed by -O-, -SO₂-, -CH=CH- or (-CH₂-)ₓ (wherein x is an integer from 1 to 4)).

Examples of preferred polybenzimidazole resins include poly-2,2'-(m-phenylene)-5,5'-bibenzimidazole, poly-2,2'-(pyridilene-3",5")-5,5'-bibenzimidazole, poly-2,2'-(furylene-2",5")-5,5'-bibenzimidazole, poly-2,2'-(naphthalene-1",6")-5,5'-bibenzimidazole, poly-2,2'-(biphenylene-4",4"')-5,5'-bibenzimidazole, poly-2,6'-(m-phenylene)-diimidazobenzene, poly-2,2'-(m-phenylene)-5,5'-di(benzimidazole)ether, poly-2,2'-(m-phenylene)-5,5'-di(benzimidazole)sulfide, poly-2,2'-(m-phenylene)-5,5'-di(benzimidazole)sulfone, poly-2,2'-(m-phenylene)-5,5'-di(benzimidazole)-methane, poly-2,2'-(m-phanylene)-5,5--di(benzimidazole)-propane-2,2, and poly-2,2"-(m-phenylene)-5,5"-di(benzimidazole)-ethylene-2, 2 (the double bond in ethylene group is complete in the final polymer). Among these, poly-2,2'-(m-phenylene)-5,5'-bibenzimidazole which contains a repeating unit expressed by the formula: 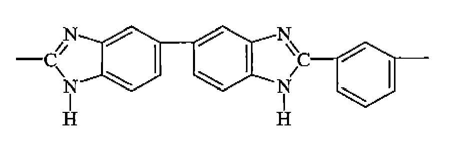 is most preferred. That type of polybenzimidazole is commercially available from Hoechst Celanese Corporation.

The (B) liquid crystalline polyester amide resin used in the present invention indicates a melt-processable polyester amide which has the melting point at a temperature of 270°C to 370°C, and can form optically anisotropic molten phase in property. The property of optically anisotropic molten phase can be identified by a common polarization inspection method utilizing orthogonal polarizers. Specifically the identification of the anisotropic molten phase can be conducted using a Leitzpolarization microscope at 40-fold magnification, by observing molten sample placed on a Leitz hot stage, under a nitrogen atmosphere. The liquid crystalline polyester amide which is applicable to the present invention exhibits optical anisotropy when being inspected between orthogonal polarizers even in a stationary molten state of by transmitting through the polarizers.

The liquid crystalline polyester amide used in the present invention is required not only to have the property capable of forming the above optically anisotropic molten phase, but also to have specified constituents.

That is, applicable monomer that structures the (B) liquid crystalline polyester amide resin includes an aromatic hydroxycarboxylic acid, an aromatic carboxylic acid, an aromatic diol and the like. In addition to those monomers, it is necessary to contain one or more of 4-aminophenol, 1,4-phenylene diamine, 4-aminobenzoic acid, and a derivative thereof, and to contain an amido component by an amount from 3 to 35% by mole to the total bonds.

Applicable aromatic hydroxycarboxylic acids include 4-hydroxybenzoic acid and 6-hydroxy-2-naphthoic acid. Applicable aromatic carboxylic acids include terephthalic acid, isophthalic acid, 4,4'-diphenyl dicarboxylic acid, and 2,6-naphthalene dicarboxylic acid. Applicable aromatic diols include 2,6-dihydroxynaphthalene, 4,4'-dihydroxybiphenyl, hydroquinone, and resorcin. Derivatives of these compounds are also included as the monomer.

Applicable monomer allowing the amide component to exist by an amount from 3 to 35% by mole includes the above-described 4-aminophenol, 1,4-phenylene diamine, 4-aminobenzoic acid, and derivatives of them, such as 4-acetoxy-aminophenol.

Specifically, the (B) liquid crystalline polyester amide resin is preferably an all-aromatic polyester amide which is obtained by copolymerizing the following-given monomers (i) to (v) in the following ranges.
(i) 6-hydroxy-2-naphthoic acid: 30 to 90% by mole
(ii) 4-aminophenol: 3 to 35% by mole
(iii) terephthalic acid: 15 to 35% by mole
(iv) 4-hydroxybenzoic acid: 0 to 70% by mole
(v) 4,4'-dihydroxybiphenyl: 0 to 15% by mole

According to the present invention, the applied (A) thermoplastic resin is a sole polybenzimidazole resin or a mixture of 70 to 20% by weight of a polybenzimidazole resin and 30 to 80% by weight of a polyether ketone resin.

In the present invention, the blending ratio of the (A) sole polybenzimidazole resin or a mixture of the polybenzimidazole resin with the polyether ketone resin, to the (B) liquid crystalline polyester amide resin is 5 to 100 parts by weight of the (B) liquid crystalline polyester amide resin to 100 parts by weight of the (A) thermoplastic resin. If the blending ratio of the (B) liquid crystalline polyester amide resin is less than 5 parts by weight, the improvement effect of rigidity, which is a purpose of the present invention, becomes less. If the blending ratio of the (B) liquid crystalline polyester amide resin exceeds 100 parts by weight, the (A) thermoplastic resin becomes difficult to function as the matrix. Both cases are not preferable. A preferable blending rate is 7 to 80 parts by weight of the (B) liquid crystalline polyester amide resin, and more preferably 10 to 40 parts by weight, to 100 parts by weight of the (A) thermoplastic resin.

It is preferred to add (C) a reinforcing fiber into the resin composition according to the present invention.

Applicable (C) reinforcing fiber includes: glass fiber, asbestos fiber, silica fiber, silica-alumina fiber, alumina fiber, zirconia fiber, boron nitride fiber, silicon nitride fiber, boron fiber, potassium titanate fiber, silicate fiber such as wollastonite, magnesium sulfate fiber, aluminum borate fiber, fibrous substances of metal such as stainless steel, aluminum, titanium, copper or brass, and fibrous substances of carbon such as carbon fiber or carbon nanotube. Specifically typical reinforcing fibers are glass fiber and carbon fiber.

In addition, the resin composition according to the present invention can further add, as auxiliary additive, powder-particle or plate-like inorganic filler other than the above reinforcing fibers, within a range not to deteriorate the purpose the present invention aims at.

The above powder-particle filler includes carbon black, graphite, silica, quartz powder, glass bead, milled glass fiber, glass balloon, glass powder, calcium silicate, aluminum sulfate, kaolin, clay, diatom earth, silicate such as wollastonite, metal oxides such as iron oxide, titanium oxide, zinc oxide, antimony trioxide or alumina, metal carbonates such as calcium carbonate or magnesium carbonate, metal sulfates such as calcium sulfate or barium sulfate, ferrite, silicon carbide, silicon nitride, boron nitride, and powder of varieties of metals.

Applicable sheet-shape filler includes mica, glass flake, talc, and varieties of metal foils.

These inorganic fillers can be used separately or in combination of two or more of them. Inclusion of large amount of inorganic filler, however, induces significant deterioration of toughness. Accordingly, the additive amount of them is preferably limited to a range from 5 to 40% by weight, including the (C) reinforcing fiber, in the composition.

On applying these fillers, there can be used a convergence agent or a surface treatment agent, at need.

The thermoplastic resin composition according to the present invention may further contain, as auxiliary component, a thermoplastic resin other than the above within a range not to deteriorate the purpose the present invention aims at.

Applicable auxiliary thermoplastic resin includes: a polyolefin such as polyethylene or polypropylene; an aromatic polyester, composed of an aromatic dicarboxylic acid and diol and the like, such as polyethylene terephthalate or polybutylene terephthalate; polyacetal (homo or copolymer); polystyrene; polyvinylchloride; polycarbonate; ABS; polyphenylene oxide; polyphenylene sulfide; fluororesin and the like. These thermoplastic resins can be used in combination of two or more of them.

A method for manufacturing the resin composition according to the present invention includes simultaneous melting and kneading of the respective components in an extruder, which are composed of a sole polybenzimidazole resin or a mixture of a polybenzimidazole resin and a polyether ketone resin, a liquid crystalline polyamide resin, an inorganic filler and the like, if needed. In view of suppressing the decomposition of resin, the melting temperature during the melting and kneading operation is preferably within the range of 300°C to 400°C.

Alternatively, the kneading may be conducted using a master batch prepared by melting and kneading some of them in advance. The resin composition prepared by melting and kneading in the extruder is preferably sent to a pelletizer to cut into pellets before forming the molding by injection molding.

### Examples

The present invention is described in more detail in the following referring to examples, but is not limited to these examples. The methods for determining physical properties adopted in the examples are the following.

### (Melting point)

The melting point was determined using a differential scanning calorimeter (DSC7, manufactured by Perkin Elmer) at a temperature rising/falling rate of 20°C/min.

### (Melt viscosity)

The melt viscosity was determined using Capirograph 1B manufactured by Toyo Seiki Seisaku-sho, Ltd., with an orifice having a inner diameter of 1 mm and a length of 20 mm, under the condition of shear rate of 1000 sec⁻¹ at a specified temperature.

### (Flexural modulus)

The flexural modulus was determined in accordance with ASTM D790 using a piece of molding (125 mm x 12.7 mm x 0.8 mm) prepared by injection molding.

### (Charpy impact value)

The Charpy impact value was determined by an impact test in accordance with ISO 179 using a piece of molding (80 mm x 10 mm x 4 mm) prepared by injection molding, which was notched in accordance with ISO 2818.

### Manufacture Example 1 (Manufacture of liquid crystalline polyester amide <1>)

To a polymerization vessel equipped with an agitator, a reflux column, a monomer input opening, a nitrogen gas inlet, a pressure reducing line and an outlet line, the nitrogen-substitution was initiated by adding the following-listed raw material monomers, catalyst, and acylating agent in the space of the polymerization vessel.
(A) 6-hydroxy-2-naphthoic acid: 225.90 g (60% by mole)
(B) terephthalic acid: 66.48 g (20% by mole)
(C) 4-acetoxy-aminophehol: 60.48 g (20% by mole)
Potassium acetate: 22.5 mg
Acetic anhydride: 166.67 g

After adding the raw materials, the temperature of the reaction system was increased to 140°C to react for one hour. Afterwards, the reaction system was heated to 330°C over 3.3 hours, and from that temperature the reaction system was depressurized to 10 Torr (1330 Pa) over 20 min, and the melt polymerization was conducted while distilling acetic acid, excess amount of acetic anhydride, and other low-boiling components. Once the agitation torque reached a specified level, nitrogen gas was introduced to the reaction system to bring the system to reduced pressure and further via normal pressures to a pressurized state, thereby the polyester amide <1> being discharged from the bottom of the polymerization vessel.

### Manufacture Example 2 (Manufacture of liquid crystalline polyester <2>)

The polyester <2> was prepared in the same procedure as that of Manufacture Example 1 except that the raw material monomers, the catalyst, and the acylating agent were the followings, and that the temperature increase to 330°C took 3.5 hours.
(A) 4-hydroxybenzoic acid: 226.4 g (73% by mole)
(B) 6-hydroxy-2-naphthoic acid: 114.1 g (27% by mole)
Potassium acetate: 22.5 mg
Acetic anhydride: 233.8 g

The obtained polyester amide <1> and the polyester <2> were observed by a polarization microscope with crossed nicols in a molten state at 300°C, and it was found that they show a distinctive optical anisotropy, thereby being the thermotropic liquid crystalline resin. The characteristics of individual liquid crystalline resins are given in Table 1.

**Table 1**

| Polymer | Polyester amide <1> | Polyester <2> |
|---|---|---|
| Melting point/°C | 280 | 280 |
| Melt viscosity/Pa· s (Measuring temperature; Melting point+20°C) | 86 | 60 |

### Example 1 and Comparative Examples 1 and 2

As listed in Table 2, the liquid crystalline polyester amide <1>, the liquid crystalline polyester <2>, and the polyether ketone/polybenzimidazole-blended resin (Celazole TU-60 (polyether ketone / polybenzimidazole = 50/50 (weight ratio), manufactured by Clariant (Japan) K.K.), were dry-blended at blending rates given in Table 2. Thus prepared mixture was melted and kneaded in a twin-screw extruder (PCM-30, manufactured by Ikegai Ironworks Co.) to manufacture pellets at a cylinder temperature of 390°C.

Using an injection molding machine, thus prepared pellets were molded into the above test pieces under the condition given below, thus evaluated the characteristics thereof. The result is given in Table 2.

### (Condition of injection molding)

Molding machine: JSW J75SSII-A
Cylinder temperature: given in Table 2
Mold temperature: 220°C
Injection speed: given in Table 2
Pressure-holding force: 58.8 MPa
Cycle: Injection pressure holding 7sec + Cooling molding 20 sec
Screw rotation speed: 100 rpm
Screw backpressure: 3.5 MPa

**Table 2**

| | Comparative Example 1 | Example 1 | Comparative Example 2 |
|---|---|---|---|
| PEK/PBI (parts by weight) | 100 | 100 | 100 |
| Polyester amide <1> (parts by weight) | | 5 | |
| Polyester <2> (parts by weight) | | | 5 |
| Cylinder temperature/°C | 430-430-420-410 | 400-400-390-380 | 420-420-410-400 |
| Injection speed/m/min | 15 | 10 | 15 |
| Filling state | × ^{*1} | ○ | ○ |
| Flexural modulus/MPa | 4700 | 5000 | 4900 |
| Melt viscosity/Pa·s | 717 | 529 | 122^{*2} |
| Charpy impact value/J/cm² | 3.1 | 3.9 | 3.2 |

| | | | |
|---|---|---|---|
| *1 Filling could not completely be done, and the molded article obtained was shorter by about 10% in length than that of the molded article completely filled. The mechanical properties were determined by using molded articles incompletely filled. *2 Although the melt viscosity was low, the decrease in the melt viscosity was caused by the decomposition of the resin. The surface of the molded article obtained could not be practically used. | | | |

## Claims

1. A thermoplastic resin composition comprising: (A) 100 parts by weight of a sole polybenzimidazole resin or a mixed thermoplastic resin composed of 70 to 20% by weight of a polybenzimidazole resin and 30 to 80% by weight of a polyether ketone resin; and (B) 5 to 100 parts by weight of a liquid crystalline polyester amide resin comprising one or more types of structuring monomer of 4-aminophenol, 1,4-phenylenediamine, 4-aminobenzoic acid and a derivative thereof, and containing 3 to 35% by mole of an amide component in the total bonds.

2. The thermoplastic resin composition according to claim 1, wherein the (B) liquid crystalline polyester amide resin has a melting point in the range of from 270°C to 370°C, determined by a differential scanning calorimeter (DSC) , and shows optical anisotropy in softening and flowing.

3. The thermoplastic resin composition according to claim 1 or claim 2, wherein the (B) liquid crystalline polyester amide resin is a wholly aromatic polyester amide prepared by copolymerizing the monomers of (i) to (v) within the range specified below,
(i) 6-hydroxy-2-naphthoic acid: 30 to 90% by mole;
(ii) 4-aminophenol: 3 to 35% by mole;
(iii) terephthalic acid: 15 to 35% by mole;
(iv) 4-hydroxybenzoic acid: 0 to 70% by mole; and
(v) 4,4'-dihydroxybiphenyl: 0 to 15% by mole.

4. The thermoplastic resin composition according to any one of claims 1 to 3, further comprising (C) a reinforcing fiber.

5. The thermoplastic resin composition according to claim 4, wherein the (C) reinforcing fiber is glass fiber or carbon fiber.

6. An injection-molded article, comprising the thermoplastic resin composition according to any one of claims 1 to 5.
